(19) Europäisches Patentamt / European Patent Office / Office européen des brevets

(11) **EP 2 957 593 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(51) Int Cl.:
**C08L 9/06** (2006.01)     **C08L 7/00** (2006.01)
**C08L 9/00** (2006.01)     **B60C 1/00** (2006.01)
**C08L 65/00** (2006.01)

(21) Anmeldenummer: **15162888.0**

(22) Anmeldetag: **09.04.2015**

(54) **KAUTSCHUKMISCHUNG, IHRE VERWENDUNG UND FAHRZEUGLUFTREIFEN**

RUBBER COMPOSITION, USE OF SAME AND PNEUMATIC TYRE FOR A VEHICLE

MÉLANGE DE CAOUTCHOUC, SON UTILISATEUR ET PNEUS DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2014 DE 102014211817**

(43) Veröffentlichungstag der Anmeldung:
**23.12.2015 Patentblatt 2015/52**

(73) Patentinhaber: **Continental Reifen Deutschland GmbH**
**30165 Hannover (DE)**

(72) Erfinder:
 • **Pavon Sierra, Viktoria**
  **30419 Hannover (DE)**
 • **Müller, Norbert**
  **29336 Nienhagen (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
 • DATABASE WPI Week 200323 Thomson Scientific, London, GB; AN 2003-236987 XP002747738, & KR 2002 0089890 A (HANKOOK TIRE MFG CO LTD) 30. November 2002 (2002-11-30)
 • DATABASE WPI Week 200513 Thomson Scientific, London, GB; AN 2005-116031 XP002747739, & JP 2005 023146 A (YOKOHAMA RUBBER CO LTD) 27. Januar 2005 (2005-01-27)
 • DATABASE WPI Week 200233 Thomson Scientific, London, GB; AN 2002-285277 XP002747740, & JP 2001 302847 A (OHTSU TIRE & RUBBER CO LTD) 31. Oktober 2001 (2001-10-31)
 • DATABASE WPI Week 199131 Thomson Scientific, London, GB; AN 1991-225852 XP002747741, & JP H03 143935 A (NIPPON GOMU KK) 19. Juni 1991 (1991-06-19)
 • DATABASE WPI Week 199848 Thomson Scientific, London, GB; AN 1998-562290 XP002747742, & JP H10 250306 A (SUMITOMO RUBBER IND LTD) 22. September 1998 (1998-09-22)

EP 2 957 593 B1

**Beschreibung**

Die Erfindung betrifft eine Kautschukmischung, insbesondere für Laufstreifen von Fahrzeugluftreifen, welche zumindest einen synthetischen Dienkautschuk, Naturkautschuk, wenigstens eine Kieselsäure sowie zumindest ein Mercaptosilan enthält.

Um die physikalischen Eigenschaften von Kautschukmischungen, die beispielsweise in Fahrzeugluftreifen oder technischen Gummiartikeln, wie Gurten, Riemen und Schläuchen, Verwendung finden, zu optimieren, sind der Fachwelt verschiedene Maßnahmen bekannt. So wurden beispielsweise vielfältige Versuche unternommen, um die Eigenschaften von Reifen durch Variation der Polymerkomponente und der Zuschlagstoffe, wie beispielsweise Füllstoffe, Weichmacher, Alterungsschutz sowie die Bestandteile des Vernetzungssystems, in der Laufstreifenmischung zu verbessern. Wird durch Variation der Mischungsbestandteile allerdings eine Eigenschaft verbessert, geht dies häufig mit einer Verschlechterung einer anderen Eigenschaft einher, sodass gewisse Zielkonflikte vorliegen. Insbesondere der Rollwiderstand spielt nicht nur bei Fahrzeugluftreifen, sondern auch bei technischen Gummiartikeln eine entscheidende Rolle. Eine Verbesserung des Rollwiderstandes führt dabei häufig zu einer Verschlechterung anderer physikalischer Eigenschaften der Vulkanisate, wie zum Beispiel des Nassgriffs und/oder der Reißdehnung.

Aus der JP 2013 100 426 A ist eine Kautschukmischung für einen Fahrzeugluftreifen, welche einen Dienkautschuk, Silica und Mercaptosilan enthält, bekannt, deren Verwendung in Laufstreifen zu einer Reduktion des Rollwiderstandes führen soll.

Die JP 2011 144 263 A offenbart eine Kautschukmischung für einen Fahrzeugluftreifen, welche einen Isopren-Kautschuk oder Naturkautschuk, Silica und Mercaptosilan als Kupplungsagenz enthält. Ein aus dieser Kautschukmischung hergestellter Laufstreifen soll sowohl einen geringen Rollwiderstand als auch einen guten Eisgriff besitzen.

Aus der JP 2010 270 247 A ist eine Kautschukmischung für Fahrzeugluftreifen bekannt, welche ebenfalls einen geringen Rollwiderstand aufweisen soll. Diese Kautschukmischung ist mit Silica gefüllt und beinhaltet auch Mercaptosilan.

Einen geringen Rollwiderstand soll auch ein Reifen, dessen Laufstreifen gemäß der Kautschukmischung aus der JP 2008 214 521 A hergestellt ist, aufweisen. Die offenbarte Mischung enthält unter anderem Natur- und/oder Synthesekautschuk, Silica, Ruß sowie geblocktes Mercaptosilan als Kupplungsagenz.

Die US 2008 016 125 8 A1 offenbart eine Silica, Silan und geblocktes Mercaptosilan enthaltende Kautschukmischung, in welcher das Verhältnis von geblocktem Mercaptosilan zu Silan von 1:1 bis 5:1 beträgt.

Die aus den obigen Druckschriften bekannte Kautschukmischungen beinhalten somit Silica sowie ein Mercaptosilan. Durch Zusatz dieser Substanzen kann zwar der Rollwiderstand von Laufstreifen, welche aus diesen Kautschukmischungen hergestellt sind, verbessert werden, jedoch nur zu Lasten der Abriebs- und Reißeigenschaften. Damit neigen die aus solchen Kautschukmischungen hergestellten Laufstreifen zum Auftreten von "Chip & Chunk" - Effekten. Unter "Chipping und Chunking" werden auffallende Schäden am Laufstreifen, wie Einrisse, Abblätterungen oder Ausbrüche verstanden. Solche Schäden treten vor allem bei Nutzfahrzeugreifen, welche insbesondere an Fahrzeugen, die in Baustelleneinsätzen verwendet werden, auf.

Es sind auch Kautschukmischungen für Laufstreifen bekannt, die Polynorbornen-Kautschuk enthalten. Beispielsweise enthält die aus der KR 2002 008 989 0 A für einen Laufstreifen vorgesehene Kautschukmischung 100 phr Dienkautschuk, 5 phr bis 80 phr Kieselsäure, 5 phr bis 80 phr Ruß und 1 phr bis 10 phr Polynorbornen-Kautschuk. Ferner kann in der Kautschukmischung als Kupplungsagenz Bis-9-triethoxysilylpropyl- tetrasulfid (SI 69) enthalten sein.

Eine weitere Polynorbornen-Kautschuk enthaltende Kautschukmischung offenbart die JP 2005 023 146 A, wobei diese Kautschukmischung 1 phr bis 20 phr Polynorbornen-Kautschuk, 100 phr Dienkautschuk, 20 phr Kieselsäure und 3,2 phr Bis-9-triethoxysilylpropyl- tetrasulfid (SI 69) enthält. Die aus der JP 2001 302 847 A bekannte Kautschukmischung enthält unter anderem 100 phr Dienkautschuk, 2 phr bis 20 phr Polynorbornen-Kautschuk sowie vorzugweise Silica und Silan.

Der Erfindung liegt daher die Aufgabe zu Grunde, eine Kautschukmischung bereitzustellen, die über einen niedrigen Rollwiderstand und gute Abriebseigenschaften sowie über bessere Reißeigenschaften, d.h. eine hohe Reißfestigkeit, verfügt.

Gelöst wird die gestellte Aufgabe erfindungsgemäß dadurch, dass die Kautschukmischung zumindest einen Polynorbornen-Kautschuk enthält.

Laufstreifen für Fahrzeugluftreifen, die aus einer erfindungsgemäßen Kautschukmischung gefertigt sind, weisen einen geringen Rollwiderstand und einen hohen Abriebswiderstand auf, wobei überraschenderweise die Nassgriffeigenschaften unverändert gut bleiben. Außerdem weisen Laufstreifen, die aus einer Kautschukmischung gemäß der Erfindung hergestellt sind, eine besonders hohe Reißfestigkeit auf, wodurch die Wahrscheinlichkeit des Auftretens von "Chip & Chunk"-Effekten merkbar verringert wird.

Gemäß einer vorteilhaften Ausführungsform der Erfindung enthält die Kautschukmischung Polynorbornen-Kautschuk zusätzlich zu den sonstigen in der Mischung enthaltenen Kautschukkomponenten in einer Menge von 5 phr bis 40 phr, insbesondere in einer Menge von 9 phr bis 31 phr, wodurch besonders günstige Rollwiderstands-, Abriebs- und Reißeigenschaften erzielt werden können.

Erfindungsmäßige Kautschukmischungen beinhalten des Weiteren zumindest eine amphiphile Verbindung in einer Menge von 0,5 phr bis 10 phr, vorzugsweise von 2 phr bis 8 phr, besonders bevorzugter Weise von 5 phr bis 7 phr, wobei als amphiphile Verbindungen beispielsweise anionische Tenside, kationische Tenside, nichtionische Tenside, Amphotenside oder Blockcopolymere alleine oder auch in Kombination eingesetzt werden. Die zugesetzten amphiphilen Verbindungen sind in der Lage, die als Füllstoff zugesetzte Kieselsäure zu hydrophobieren, wodurch Füllstoff-Füllstoff-Wechselwirkungen verringert werden und folglich die Dispersion der Kieselsäure in der Kautschukmischung, d.h. deren Verteilung in der Mischung, während der Herstellung der Kautschukmischung verbessert wird. Dadurch kann der Rollwiderstand eines aus dieser Kautschukmischung hergestellten Laufstreifens verbessert werden, ohne den Nassgriff und weitere physikalische Eigenschaften, insbesondere die Bruchdehnung, negativ zu beeinflussen.

Gemäß einer vorteilhaften Ausführungsform der Erfindung ist der Kautschukmischung geblocktes und/oder ungeblocktes Mercaptosilan in einer Menge von 6 phf bis 13 phf, vorzugsweise 8 phf bis 12 phf, zugesetzt, wobei sich diese Maßnahme ebenfalls günstig auf den Rollwiderstand eines Laufstreifens, welcher aus der Kautschukmischung hergestellt ist, auswirkt. Darüber hinaus ermöglicht Mercaptosilan als Silankupplungsagenz durch eine Reaktion mit den oberflächlichen Silanolgruppe der Kieselsäure während des Mischens der Kautschukmischung eine kovalente Anbindung der Kieselsäure an den Dienkautschuk, wodurch die mechanischen Eigenschaften der Mischung, insbesondere die Reißfestigkeit, verbessert werden.

Des Weiteren enthält die Kautschukmischung synthetischen Dienkautschuk in einer Menge von 10 phr bis 100 phr, insbesondere von 30 phr bis 80 phr, und besonders bevorzugter Weise von 40 phr bis 60 phr, wie beispielsweise Styrolbutadienkautschuk, synthetisches Polyisopren und Butadienkautschuk, einzeln oder auch in Kombination. Diese Kautschuke wirken sich auf sämtliche für einen Laufstreifen relevante Eigenschaften positiv aus. Darüber hinaus ist eine kovalente Anbindung von Kieselsäure über ein Silankupplungsagenz an einen Kautschuk nur dann möglich, wenn der Kautschuk, wie beispielsweise ein Dienkautschuk, Doppelbindungen enthält.

Durch Zusatz von Ruß in einer Menge von maximal 20 phr, insbesondere in einer Menge von maximal 10 phr, werden die Abriebseigenschaften günstig beeinflusst.

Durch Zusatz von Kieselsäure in einer Menge von 60 phr bis 160 phr, insbesondere von 80 phr bis 140 phr und in besonders bevorzugter Weise von 100 phr bis 125 phr, können die Reißfestigkeiten der aus der Kautschukmischung hergestellten Vulkanisate gesteigert werden, wodurch das Auftreten von "Chip & Chunk"- Effekten bei Laufstreifen aus dieser Kautschukmischung weitgehend verhindert wird.

Die Erfindung betrifft ferner die Verwendung der Kautschukmischung zur Herstellung des Laufstreifens eines Fahrzeugluftreifens sowie einen Fahrzeugluftreifen, welcher im Laufstreifen eine erfindungsgemäße Kautschukmischung enthält. Der Fahrzeugluftreifen kann ein beliebiger Fahrzeugluftreifen sein, insbesondere ein LKW-Reifen, aber auch ein PKW-Reifen. Die erfindungsmäßige Kautschukmischung wird vor allem zur Herstellung jenes Laufstreifenteils verwendet, der beim Betrieb des Reifens mit dem Untergrund (Fahrbahn) in Kontakt kommt.

In der nachfolgenden Beschreibung sowie in den Tabellen sind die Mengen im Allgemeinen in der in der Kautschuktechnologie üblichen Einheit phr (parts per hundred rubber) angegeben. Die Mengenangaben beziehen sich dabei jeweils auf die Massenteile des Grundpolymers bzw. bei Polymerblends auf jene der Grundpolymere. Bei Silanen erfolgt die Mengenangabe in phf (parts per hundred filler). Die Mengenangaben beziehen sich dabei jeweils auf die Massenteile des Füllstoffs bzw. der Füllstoffe.

Weitere Merkmale, Vorteile und Einzelheiten der Erfindung werden nun anhand von Vergleichs- und Ausführungsbeispielen, die in Tabelle 1 und Tabelle 2 zusammengefasst sind, näher erläutert. Die Mischungszusammensetzungen sämtlicher Mischungen sind in Tabelle 1 angegeben. Tabelle 2 enthält Ergebnisse geprüfter physikalischer Eigenschaften. Bei der mit "E1" gekennzeichneten Kautschukmischung handelt es sich hierbei um eine Mischung gemäß der Erfindung, während es sich bei den mit "V" gekennzeichneten Mischungen um Vergleichsmischungen handelt.

Die Mischungsherstellung erfolgte unter den üblichen Bedingungen in mehreren Stufen in einem Labortangentialmischer. Aus sämtlichen Mischungen wurden Prüfkörper durch Vulkanisation hergestellt und es wurden mit diesen Prüfkörpern einige typische Materialeigenschaften bestimmt. Folgende Testverfahren wurden angewandt:

- MDR 2000 bei 160 °C nach DIN ISO 9001
- Shore A-Härte
- Konditionierte Shore A-Härte bei Raumtemperatur und bei 70°C
- Rückprallelastizität bei Raumtemperatur und bei 70°C gemäß DIN 53 512
- Reißfestigkeit und Reißdehnung bei Raumtemperatur nach DIN 53 504
- E'mean und Verlustfaktor tan d, synonym zu tan $\delta$, bei 55°C aus dynamischmechanischer Messung gemäß DIN 53 513

Die Härten der Vulkanisate wurden sowohl an konditionierten als auch an nicht konditionierten Prüfkörpern ermittelt. Durch eine Konditionierung der Prüfkörper in Form einer Belastung vor der Härteprüfung werden bleibende Strukturveränderungen in den Prüfkörpern bewirkt, wodurch über die nachfolgend ermittelten Materialkennwerte Aussagen über die Eigenschaften der Mischungen bei einem Einsatz in Laufstreifen von Fahrzeugluftreifen gemacht werden können.

Die eigentliche Härtemessung erfolgte nach ISO 868 mit einem Tischmodell. Die Härte ergibt sich als Mittelwert aus fünf Einzelmessungen an unterschiedlichen Stellen eines zylindrischen Prüfkörpers, welcher einen Durchmesser von mindestens 35 mm sowie eine Dicke von mindestens 6 mm aufweist.

Die Messung der Shore A-Härten erfolgte nach ISO 7619-1:2004 (auch unter DIN ISO 7619-1 bekannt). Diese Messung erfordert Prüfkörper, die nicht vorbeansprucht wurden.

Die Messung der konditionierten Härten erfolgte in Anlehnung an ISO 7619-1:2004. Die Prüfkörper wurden zehnfach mit 5 MPa vorkonditioniert und anschließend nach ISO 868 geprüft. Da die Messung von konditionierten Prüfkörpern von der Norm abweicht wird die Härte nicht in der Einheit Shore A erhalten. Die Einheit der konditionierten Härte wird daher nachfolgend als "Shore A*" bezeichnet.

Zur Messung der konditionierten Härte bei 70°C wurden die Prüfkörper nach einer zehnfachen Vorkonditionierung mit 5 MPa in einem Wärmeschrank für 30 Minuten bei 70°C temperiert und anschließend geprüft.

Die Rückprallelastizität gemäß DIN 53 512 bei 70°C dient als Maß für den Rollwiderstand, wobei eine hohe Rückprallelastizität einen niedrigen Rollwiderstand bedeutet. Als Maß für den Nassgriff wird die Rückprallelastizität gemäß DIN 53 512 bei Raumtemperatur herangezogen.

Der dynamische Speichermodul E'mean ist ein Maß für die Steifigkeit der Vulkanisate, wobei sich ein relativ hoher Wert günstig auf eine gute Übertragung von Lenkkräften auf die Straße auswirkt.

Aussagen zu den "Chip und Chunk"- Eigenschaften eines Laufstreifens, welche die Tendenz zum Auftreten von Schäden am Laufstreifen, wie Einrisse, Abblätterungen oder Ausbrüche, darstellen, können anhand der Reißeigenschaften der Vulkanisate der Kautschukmischung, aus welcher der Laufstreifen hergestellt ist, gemacht werden.

Zur Beurteilung des Abriebsverhaltens wurde der Parameter "bound rubber" verwendet. Unter "bound rubber" wird das an den /die Füllstoff(e) gebundene Polymer, welches unter definierten Bedingungen nicht mit Cyclohexan extrahiert werden kann, verstanden. Der "bound rubber" soll den Effekt der Polymermodifikation darstellen. Bekanntermaßen trägt eine Erhöhung des "bound rubber" in einer Kautschukmischung zur Verbesserung des Abriebsverhaltens der aus dieser Kautschukmischung hergestellten Vulkanisate bei. Zur Bestimmung des "bound rubber" wird die zu untersuchende Kautschukmischung auf einem kalten Walzwerk dünn ausgerollt. Hieraus werden vier Prüfkörper eines Durchmessers von 5 mm ausgestanzt und zugeschnitten. Zwei Prüfkörper werden 16 h mit Aceton und zwei Prüfkörper 40 h mit Cyclohexan in einer Extraktionsanlage nach Soxhlet extrahiert. Anschließend werden die Prüfkörper im Vakuumtrockenschrank 2 h bei 60°C getrocknet. Für alle Prüfkörper werden die Füllstoffgehalte mittels Thermo-Gravimetrischer Analyse (TGA) gemäß DIN 51006 und ASTM D 5443 bestimmt.

Der "bound rubber" ergibt sich wie folgt:

$$bound\ rubber\ (\%) = \frac{\%org.Mat_{cyc} * \%FS_{ace} * 100}{\%org.Mat_{ace} * \%FS_{cyc}}$$

| | |
|---|---|
| %org. Mat$_{cyc}$ | organsicher Anteil TGA Cyclohexan-extrahierte Probe |
| %org. Mat$_{ace}$ | organsicher Anteil TGA Aceton-extrahierte Probe |
| %FS$_{cyc}$ | Ruß + Asche TGA Cyclohexan-extrahierte Probe |
| %FS$_{ace}$ | Ruß + Asche TGA Aceton-extrahierte Probe |

In Tabelle 1 sind die Zusammensetzungen der untersuchten Vergleichsmischungen und der gemäß einer möglichen Ausführungsform der Erfindung zusammengesetzten Mischung, der Mischung E1, angegeben.

**Tabelle 1: Mischungszusammensetzungen**

| Bestandteil | Einheit | V1 | V2 | V3 | E1 |
|---|---|---|---|---|---|
| Naturkautschuk [a] | phr | 20,0 | 20,0 | 20,0 | 20,0 |
| Styrolbutadienkautschuk [b] | phr | 30,0 | 30,0 | 30,0 | 30,0 |
| Styrolbutadienkautschuk [c] | phr | 68,7 | 68,7 | 68,7 | 68,7 |
| Ruß [d] | phr | 5,0 | 5,0 | 5,0 | 5,0 |
| Kieselsäure [e] | phr | 115,0 | 115,0 | 115,0 | 115,0 |
| Weichmacher [f] | phr | 20,0 | 20,0 | - | - |

(fortgesetzt)

| Bestandteil | Einheit | V1 | V2 | V3 | E1 |
|---|---|---|---|---|---|
| Amphiphile Verbindung [g] | phr | 6,0 | 6,0 | 6,0 | 6,0 |
| Silan [h] | phf | 8,3 | - | 8,3 | - |
| Geblocktes Mercaptosilan [i] | phf | - | 11,8 | - | 11,8 |
| Polynorbornen-Kautschuk[j] - on top | phr | - | - | 40 | 40 |
| Additive [k] | phr | 8 | 8 | 8 | 8 |
| Zinkoxid | phr | 2,0 | 2,0 | 2,0 | 2,0 |
| Stearinsäure | phr | 1,0 | 1,0 | 1,0 | 1,0 |
| Duralink HTS pdr-d-s | phr | 0,7 | 0,7 | 0,7 | 0,7 |
| Beschleuniger [l] | phr | 5,2 | 5,2 | 6,1 | 6,1 |
| Schwefel | phr | 1,0 | 1,0 | 1,2 | 1,2 |

[a] SIR 205ED von Fa. SED ANEKA BUMI PRATAMA
[b] SPRINTAN SLR-4602 von Fa. Styron Deutschland GmbH
[c] TUFDENE F3440 von Fa. Asahi Rubber Inc.
[d] CORAX N 339 von Fa. Evonik NORLAB AB
[e] ULTRASIL VN3 GR von Fa. Evonik Industries AG
[f] BP VIVATEC 500 von Fa. Klaus Dahleke KG
[g] STRUKTOL EF 44, STRUKTOL GTI von Fa. Schill + Seilacher GmbH
[h] Si266 von Fa. Evonik Industries AG
[i] NXT Silane von Fa. Momentive Performance Materials Inc.
[j] Norsorex 100 PA von Fa. Astrotech
[k] DTPD, 6PPD, TMQ, Ozonschutzwachs
[l] MBT, TBZTD, DPG, TBBS

Gemäß den Mischungszusammensetzungen aus Tabelle 1 beinhaltet
die Vergleichsmischung V1 eine amphiphile Verbindung und ein Silan;
die Vergleichsmischung V2 eine amphiphile Verbindung und ein geblocktes Mercaptosilan;
die Vergleichsmischung V3 eine amphiphile Verbindung, ein Silan und einen Polynorbornen-Kautschuk;
die Mischung E1 eine amphiphile Verbindung, ein geblocktes Mercaptosilan und einen Polynorbornen-Kautschuk.

Gemäß der Erfindung ausgeführte Kaustchukmischungen enthalten zumindest einen synthetischen Dienkautschuk und einen Naturkautschuk. Als synthetische Dienkautschuke werden beispielsweise Butadienkautschuke, Styrolbutadienkautschuke und synthetische Polyisoprene einzeln oder auch in Kombination eingesetzt. Die synthetischen Dienkautschuke werden in Mengen von 10 phr bis 100 phr, vorzugsweise von 30 phr bis 80 phr und insbesondere bevorzugt in Mengen von 40 phr bis 60 phr, zugesetzt.

Als Füllstoffe enthalten erfindungsmäßige Kautschukmischungen zumindest eine Kieselsäure und vorzugsweise zumindest einen Ruß. Als Ruße kommen beispielsweise N 339, N 375, N 326, N234 sowie N121 einzeln oder auch in Kombination zum Einsatz. Ruß wird in Mengen von 0 phr bis 20 phr und bevorzugter Weise in Mengen von 0 phr bis 10 phr zugesetzt. Besonders bevorzugt sind Ruße, die eine Jod-Adsorption gemäß ASTM D 1510 größer oder gleich 75 g/kg aufweisen. Die Verwendung eines solchen Rußtyps in der Kautschukmischung gewährleistet einen bestmöglichen Kompromiss zwischen Abriebswiderstand und Wärmeaufbau, der wiederum den ökologisch relevanten Rollwiderstand beeinflusst. Kieselsäure, insbesondere eine Fällungskieselsäure, wird in einer Menge von 60 phr bis 160 phr, insbesondere von 80 phr bis 140 phr und besonders bevorzugter Weise in Mengen von 100 phr bis 125 phr, zugesetzt.

Des Weiteren enthält eine erfindungsmäßige Kautschukmischung wenigstens eine amphiphile Verbindung. Diese wird der Kautschukmischung in Mengen von 0,5 phr bis 10 phr, bevorzugter Weise in Mengen von 2 phr bis 8 phr und besonders bevorzugt in Mengen von 5 phr bis 7 phr, zugesetzt. Als amphiphile Verbindungen werden beispielsweise anionische Tenside, kationische Tenside, nichtionische Tenside, Amphotenside oder Blockcopolymere alleine oder auch in Kombination eingesetzt.

Als anionische Tenside können zum Beispiel Seifen, Alkylbenzolsulfonate, Alkansulfonate, Alklysulfate oder Fettalkoholpolyglygolethersulfate verwendet werden. Als kationische Tenside kommen zum Beispiel quartäre Ammonium-Verbindungen mit einer oder zwei hydrophoben Gruppe(n) oder Salze langkettiger primärer Amine zum Einsatz.

Zu den eingesetzten nichtionischen Tensiden gehören Fettalkoholpolyglycolether, Alkylphenolpolyglycolether, (ethoxylierte) Sorbitanfettsäureester, Alkylpolyglucoside, Fettsäureglucamide, Fettsäureethoxylate, Ethylenoxid-Propylenoxid-Blockpolymere, Polyglycerolfettsäureester, Fettsäurealkanolamide und Aminoxide.

Als Amphotenside kommen beispielsweise N-(Acylamidoalkyl)betaine oder N-Alkyl-β-amino-propionate in Frage.

In erfindungsmäßigen Kautschukmischungen können Mercaptosilane und/oder geblockte Mercaptosilane, wie beispielsweise NXT-Silan, NXTlow VOC, NXT-Z45, NXT-Z60, NXT-Z100 (von Momentive Performance Materials INC.) oder SI363 (von Evonik Industries AG) verwendet werden. Die Mercaptosilane und/oder geblockten Mercaptrosilane werden den Kautschukmischungen einzeln oder auch in Kombination zugesetzt. In einer erfindungsmäßigen Kautschukmischung sind Mercaptosilane und/oder geblockte Mercaptosilane in einer Menge von 6 phf bis 13 phf, vorzugsweise 8 phf bis 12 phf, enthalten.

Kautschukmischungen gemäß der Erfindung ist zumindest ein Polynorbornen-Kautschuk, jeweils zusätzlich zu den anderen Kautschukkomponenten ("on top"), deren Menge in Summe 100 phr pro Mischung beträgt, hinzugefügt. In den Mischungen E1 und V3 ist ein Polynorbornen-Kautschuk, Norsorex 100 PA, welcher zu 50% aus Weichmacher besteht, zugesetzt. Damit die Shore A - Härten der Vulkanisate der Vergleichsmischungen V1, V2, V3 und des Vulkanisats der Mischung E1 zueinander ähnlich sind, enthalten die Mischungen E1 und V3 keine weiteren Weichmacher. Eine erfindungsmäßige Mischung enthält Polynorbornen-Kautschuk in einer Menge von 5 phr bis 40 phr und insbesondere in einer Menge von 9 phr bis 31 phr. Die Menge an Weichmacher in erfindungsmäßigen Kautschukmischungen wird jeweils so angepasst, dass die Vulkanisate erwünschte Shore A - Härten aufweisen.

Zur Vernetzung des Kautschuks werden den Kautschukmischungen vorzugsweise elementarer Schwefel oder Schwefelspender, wobei bestimmte Schwefelspender zugleich als Vulkanisationsbeschleuniger wirken können, hinzugefügt. Die Menge an zugesetztem Schwefel beträgt bis 10 phr, bevorzugter Weise 0,4 phr bis 2 phr und besonders bevorzugter Weise 0,7 phr bis 1,8 phr.

Beschleuniger werden in Mengen von 0,1 phr bis 10 phr, bevorzugt in einer Menge von mindestens 1 phr und besonders bevorzugt in Mengen von 4 phr bis 6,2 phr, zugesetzt. Der Beschleuniger ist vorzugsweise aus der Gruppe der Sulfenamidbeschleuniger, Thiazolbeschleuniger, Thirambeschleuniger, Mercaptobeschleuniger, Dicarbamatbeschleuniger, Aminbeschleuniger, Dithiophosphate oder der Thioharstoffe. Aus der Gruppe der Sulfenamidbeschleuniger ist insbesondere CBS (N-Cyclohexylbenzothiazol-2- sulfenamid) bevorzugt.

Des Weiteren enthalten die Kautschukmischungen die üblichen Aktivatoren. Diese Aktivatoren können Zinkoxid und Fettsäuren oder Zinkseifen auf Basis von Zinkoxid und Fettsäuren sein.

Zu den weiteren in den Kautschukmischungen befindlichen Additiven zählen unter anderem Antioxidantien, wie beispielsweise DTPD, 6PPD, TMQ, Ozonschutzwachse sowie Mastikationshilfsmittel und weitere Aktivatoren.

In Tabelle 2 sind die Prüfergebnisse der an den Vergleichsmischungen V1, V2, V3 und der gemäß der Erfindung ausgeführten Mischung E1 durchgeführten Tests zusammengefasst.

**Tabelle 2: Physikalische Prüfergebnisse**

| Eigenschaft | Einheit | V1 | V2 | V3 | E1 |
|---|---|---|---|---|---|
| $t_{10}$ | min | 1,8 | 3,6 | 0,7 | 2,8 |
| $t_{90}$ | min | 8,8 | 8,9 | 6,1 | 7,9 |
| Bound Rubber | phr | 71,4 | 66,3 | 69,3 | 78,7 |
| Shore A-Härte | Shore A | 73,6 | 68,9 | 73,5 | 67,5 |
| Konditionierte Shore A-Härte bei Raumtemperatur | Shore A* | 69,6 | 66,0 | 69,3 | 64,8 |
| Konditionierte Shore A-Härte bei 70°C | Shore A* | 66,8 | 62,5 | 66,6 | 62,3 |
| Differenz (Konditionierte Shore A-Härte bei Raumtemperatur - Shore A-Härte) | - | -4,0 | -2,9 | -4,2 | -2,7 |
| Differenz (Konditionierte Shore A-Härte bei 70°C - Shore A-Härte) | - | -6,8 | -6,4 | -6,9 | -5,2 |
| Reißfestigkeit | MPa | 14,6 | 13,6 | 11,7 | 15,0 |
| Reißdehnung | % | 297 | 305 | 229 | 298 |
| Rückprallelastizität bei Raumtemperatur | % | 20,9 | 23,4 | 20,3 | 22,9 |
| Rückprallelastizität bei 70°C | % | 50,7 | 55,2 | 54,5 | 57,6 |

(fortgesetzt)

| Eigenschaft | Einheit | V1 | V2 | V3 | E1 |
|---|---|---|---|---|---|
| $\Delta$ Rückprall | % | 29,8 | 31,8 | 34,2 | 34,7 |
| E'mean | MPa | 11,62 | 9,33 | 11,16 | 9,20 |
| tan $\delta$ | - | 0,1920 | 0,1619 | 0,1667 | 0,1441 |

Aus Tabelle 2 ist ersichtlich, dass die gemäß der Erfindung ausgeführte Kautschukmischung E1, im Vergleich zu den Vergleichsmischungen V1, V2, V3, einen signifikant höheren Wert für "bound rubber" zeigt. In der Folge weisen aus der Kautschukmischung E1 hergestellte Vulkanisate wesentlich bessere Abriebseigenschaften auf, als jene Vulkanisate, welche aus den Vergleichsmischungen V1, V2, V3 hergestellt sind.

Die berechneten Differenzen zwischen den konditionierten Härten bei Raumtemperatur bzw. den konditionierten Härten bei 70°C und den Härten der Shore A-Härte sind bei der erfindungsmäßigen Mischung E1 gegenüber den Vergleichsmischungen V1, V2 und V3 deutlich geringer. Folglich sind daher Laufstreifen aus Mischungen gemäß der Erfindung stabiler im Handling.

Gemäß Tabelle 2 weisen Vulkanisate aus der erfindungsmäßigen Mischung E1 gegenüber den Vulkanisaten aus den Vergleichsmischungen V1, V2, V3 höhere Werte für die Reißfestigkeit auf. Beim Einsatz der Mischung E1 in Laufstreifen von Fahrzeugluftreifen ist daher die Wahrscheinlichkeit des Auftretens von "Chip & Chunk" - Effekten geringer, als beim Einsatz einer der Vergleichsmischungen V1, V2 V3. Die Reißdehnung der Vulkanisate aus der Mischung E1 bleibt, im Vergleich zu den Reißdehnungen der Vulkanisate aus den Mischungen V1 und V2, weitgehend unverändert, wird also nicht negativ beeinflusst.

Die Nassgriffeigenschaften eines Laufstreifens aus der Mischung E1, welche anhand der Rückprallelastizität des Vulkanisates bei Raumtemperatur beurteilt werden, sind zu jenen der Vergleichsmischungen unverändert gut. Die Rückprallelastizität bei 70°C ist bei Vulkanisaten, welche aus der erfindungsmäßigen Mischung hergestellt sind, höher als bei Vulkanisaten aus den Vergleichsmischungen V1, V2, V3. Der Rollwiderstand eines aus einer erfindungsmäßigen Mischung hergestellten Laufstreifens ist somit geringer als jener, welcher aus einer der Vergleichsmischungen V1, V2, V3 hergestellt ist.

Die Differenz zwischen den Rückprallelastizitäten bei Raumtemperatur und jener bei 70°C wird als "$\Delta$ Rückprall" definiert. Je höher "$\Delta$ Rückprall" ist, desto besser wird der Zielkonflikt zwischen Rollwiderstand und Nassgriffeigenschaften gelöst. Das Vulkanisat aus der erfindungsmäßigen Mischung E1 weist gegenüber den Vulkanisaten aus den Vergleichsmischungen V1, V2, V3 einen höheren Wert für "$\Delta$ Rückprall" auf. Ein aus einer erfindungsmäßigen Mischung hergestellter Laufstreifen ist folglich hinsichtlich seiner Nassgriff- und Rollwiderstandseigenschaften besser optimiert, als ein aus einer Vergleichsmischung hergestellter Laufstreifen.

Bei der Betrachtung der Ergebnisse ist grundsätzlich zu bedenken, dass nicht einzelne Eigenschaften verbessert werden sollen, sondern, dass Zielkonflikte zwischen üblicherweise gegensätzlich verhaltenden Eigenschaften gelöst oder zumindest entschärft werden sollen, ohne dass die weiteren physikalischen Eigenschaften nennenswert verschlechtert werden.

**Patentansprüche**

1. Kautschukmischung, insbesondere für Laufstreifen von Fahrzeugluftreifen, welche zumindest einen synthetischen Dienkautschuk, Naturkautschuk, wenigstens eine Kieselsäure sowie zumindest ein Mercaptosilan enthält, **dadurch gekennzeichnet, dass** sie zumindest einen Polynorbornen-Kautschuk enthält.

2. Kautschukmischung nach Anspruch 1, **dadurch gekennzeichnet, dass** Polynorbornen-Kautschuk zusätzlich zu den sonstigen in der Mischung enthaltenen Kautschukkomponenten in einer Menge von 5 phr bis 40 phr, insbesondere in einer Menge von 9 phr bis 31 phr, enthalten ist.

3. Kautschukmischung nach Anspruch 1 oder 2, **dadurch gekennzeichnet, dass** zumindest eine amphiphile Verbindung in einer Menge von 0,5 phr bis 10 phr, insbesondere in einer Menge von 2 phr bis 8 phr, enthalten ist, wobei als amphiphile Verbindungen beispielsweise anionische Tenside, kationische Tenside, nichtionische Tenside, Amphotenside oder Blockcopolymere alleine oder auch in Kombination eingesetzt werden.

4. Kautschukmischung nach Anspruch 3, **dadurch gekennzeichnet, dass** zumindest eine amphiphile Verbindung in einer Menge von 5 phr bis 7 phr enthalten ist.

5.  Kautschukmischung nach einem der Ansprüche 1 bis 4, **dadurch gekennzeichnet, dass** Mercaptosilan in einer Menge von 6 phf bis 13 phf, insbesondere in einer Menge von 8 phf bis 12 phf, enthalten ist.

6.  Kautschukmischung nach einem der Ansprüche 1 bis 5, **dadurch gekennzeichnet, dass** Mercaptosilan in Form von geblocktem und/oder ungeblocktem Mercaptosilan enthalten ist.

7.  Kautschukmischung nach einem der Ansprüche 1 bis 6, **dadurch gekennzeichnet, dass** synthetischer Dienkautschuk in einer Menge von 10 phr bis 100 phr, insbesondere von 30 phr bis 80 phr, enthalten ist.

8.  Kautschukmischung nach Anspruch 7, **dadurch gekennzeichnet, dass** synthetischer Dienkautschuk in einer Menge von 40 phr bis 60 phr enthalten ist.

9.  Kautschukmischung nach einem der Ansprüche 1 bis 8, **dadurch gekennzeichnet, dass** als synthetischer Dienkautschuk Styrolbutadienkautschuk, synthetisches Polyisopren und Butadienkautschuk einzeln oder auch in Kombination enthalten ist

10. Kautschukmischung nach einem der Ansprüche 1 bis 9, **dadurch gekennzeichnet, dass** Ruß in einer Menge von maximal 20 phr, insbesondere in einer Menge von maximal 10 phr, enthalten ist.

11. Kautschukmischung nach einem der Ansprüche 1 bis 10, **dadurch gekennzeichnet, dass** Kieselsäure in einer Menge von 60 phr bis 160 phr enthalten ist.

12. Kautschukmischung nach Anspruch 11, **dadurch gekennzeichnet, dass** Kieselsäure in einer Menge von 80 phr bis 140 phr, insbesondere in einer Menge von 100 phr bis 125 phr, enthalten ist.

13. Verwendung der Kautschukmischung nach einem der Ansprüche 1 bis 12 zur Herstellung des Laufstreifens oder eines Laufstreifenteils eines Fahrzeugluftreifens.

14. Fahrzeugluftreifen, insbesondere LKW-Reifen, welcher im Laufstreifen eine Kautschukmischung gemäß einem oder mehreren der Ansprüche 1 bis 13 enthält.


**Claims**

1.  Rubber mixture which comprises at least one synthetic diene rubber, natural rubber, at least one silica, and also at least one mercaptosilane, in particular for treads of pneumatic tyres, **characterized in that**
    it comprises at least one polynorbornene rubber.

2.  Rubber mixture according to Claim 1, **characterized in that** the quantity of polynorbornene rubber present in the mixture, in addition to the other rubber components present in the mixture, is from 5 phr to 40 phr, in particular from 9 phr to 31 phr.

3.  Rubber mixture according to Claim 1 or 2, **characterized in that** a quantity of from 0.5 phr to 10 phr, in particular from 2 phr to 8 phr, of at least one amphiphilic compound is present, where by way of example anionic surfactants, cationic surfactants, non-ionic surfactants, amphoteric surfactants or block copolymers, alone or else in combination, are used as amphiphilic compounds.

4.  Rubber mixture according to Claim 3, **characterized in that** a quantity of from 5 phr to 7 phr of at least one amphiphilic compound is present.

5.  Rubber mixture according to any of Claims 1 to 4, **characterized in that** a quantity of from 6 phf to 13 phf, in particular from 8 phf to 12 phf, of mercaptosilane is present.

6.  Rubber mixture according to any of Claims 1 to 5, **characterized in that** mercaptosilane is present in the form of blocked and/or unblocked mercaptosilane.

7. Rubber mixture according to any of Claims 1 to 6, **characterized in that** a quantity of from 10 phr to 100 phr, in particular from 30 phr to 80 phr, of synthetic diene rubber is present.

8. Rubber mixture according to Claim 7, **characterized in that** a quantity of from 40 phr to 60 phr of synthetic diene rubber is present.

9. Rubber mixture according to any of Claims 1 to 8, **characterized in that** synthetic diene rubber present comprises styrene-butadiene rubber, synthetic polyisoprene or butadiene rubber, individually or else in combination.

10. Rubber mixture according to any of Claims 1 to 9, **characterized in that** a quantity of at most 20 phr, in particular at most 10 phr, of carbon black is present.

11. Rubber mixture according to any of Claims 1 to 10, **characterized in that** a quantity of from 60 phr to 160 phr of silica is present.

12. Rubber mixture according to Claim 11, **characterized in that** a quantity of from 80 phr to 140 phr, in particular from 100 phr to 125 phr, of silica is present.

13. Use of the rubber mixture according to any of Claims 1 to 12 for the production of the tread or of a tread component of a pneumatic tyre.

14. Pneumatic tyre, in particular heavy goods vehicle tyre, which comprises a rubber mixture according to one or more of Claims 1 to 13 in the tread.

**Revendications**

1. Mélange de caoutchouc, notamment pour bandes de roulement de pneus de véhicules, qui contient au moins un caoutchouc diénique synthétique, un caoutchouc naturel, au moins une silice et au moins un mercaptosilane, **caractérisé en ce qu'**il contient au moins un caoutchouc de polynorbornène.

2. Mélange de caoutchouc selon la revendication 1, **caractérisé en ce que** le caoutchouc de polynorbornène est contenu en plus des autres composants caoutchoutiques contenus dans le mélange en une quantité de 5 pce à 40 pce, notamment en une quantité de 9 pce à 31 pce.

3. Mélange de caoutchouc selon la revendication 1 ou 2, **caractérisé en ce qu'**au moins un composé amphiphile est contenu en une quantité de 0,5 pce à 10 pce, notamment en une quantité de 2 pce à 8 pce, des tensioactifs anioniques, des tensioactifs cationiques, des tensioactifs non ioniques, des amphotensioactifs ou des copolymères séquencés seuls ou également en combinaison étant par exemple utilisés en tant que composés amphiphiles.

4. Mélange de caoutchouc selon la revendication 3, **caractérisé en ce qu'**au moins un composé amphiphile est contenu en une quantité de 5 pce à 7 pce.

5. Mélange de caoutchouc selon l'une quelconque des revendications 1 à 4, **caractérisé en ce que** le mercaptosilane est contenu en une quantité de 6 pcc à 13 pcc, notamment en une quantité de 8 pcc à 12 pcc.

6. Mélange de caoutchouc selon l'une quelconque des revendications 1 à 5, **caractérisé en ce que** le mercaptosilane est contenu sous la forme de mercaptosilane bloqué et/ou non bloqué.

7. Mélange de caoutchouc selon l'une quelconque des revendications 1 à 6, **caractérisé en ce que** le caoutchouc diénique synthétique est contenu en une quantité de 10 pce à 100 pce, notamment de 30 pce à 80 pce.

8. Mélange de caoutchouc selon la revendication 7, **caractérisé en ce que** le caoutchouc diénique synthétique est contenu en une quantité de 40 pce à 60 pce.

9. Mélange de caoutchouc selon l'une quelconque des revendications 1 à 8, **caractérisé en ce qu'**un caoutchouc de styrène-butadiène, un polyisoprène synthétique et un caoutchouc de butadiène sont contenus individuellement ou également en combinaison en tant que caoutchouc diénique synthétique.

10. Mélange de caoutchouc selon l'une quelconque des revendications 1 à 9, **caractérisé en ce que** du noir de carbone est contenu en une quantité d'au plus 20 pce, notamment en une quantité d'au plus 10 pce.

11. Mélange de caoutchouc selon l'une quelconque des revendications 1 à 10, **caractérisé en ce que** la silice est contenue en une quantité de 60 pce à 160 pce.

12. Mélange de caoutchouc selon la revendication 11, **caractérisé en ce que** la silice est contenue en une quantité de 80 pce à 140 pce, notamment en une quantité de 100 pce à 125 pce.

13. Utilisation du mélange de caoutchouc selon l'une quelconque des revendications 1 à 12 pour la fabrication de la bande de roulement ou d'une partie de la bande de roulement d'un pneu de véhicule.

14. Pneu de véhicule, notamment pneu de camion, qui contient dans la bande de roulement un mélange de caoutchouc selon une ou plusieurs des revendications 1 à 13.

**IN DER BESCHREIBUNG AUFGEFÜHRTE DOKUMENTE**

**In der Beschreibung aufgeführte Patentdokumente**

- JP 2013100426 A
- JP 2011144263 A
- JP 2010270247 A
- JP 2008214521 A
- US 20080161258 A1
- KR 20020089890 A
- JP 2005023146 A
- JP 2001302847 A